# EUROPEAN PATENT APPLICATION

(11) **EP 2 677 683 A1**
(43) Date of publication of application: **25.12.2013**
(21) Application number: 12747495.5
(22) Date of filing: 15.02.2012
(51) Int. Cl.: H04L 9/08, G09C 1/00, H04L 9/14

(54) **FILE SERVER DEVICE AND FILE SERVER SYSTEM**

(30) Priority: 16.02.2011 JP 2011030813
(71) Applicant: Kabushiki Kaisha Toshiba, Minato-ku Tokyo 105-8001 (JP); Toshiba Solutions Corporation, Tokyo 105-8001 (JP)
(72) Inventor: YOSHIDA, Takuya, Tokyo 105-6691 (JP); OKADA, Koji, Tokyo 105-6691 (JP)
(74) Representative: HOFFMANN EITLE
(86) International application number: PCT/JP2012/053547
(87) International publication number: WO 2012/111714

(57) **Abstract**

A reception means receives post-office box's encrypted data, which is obtained by encrypting the data by using a post-office box's public key, from the sending apparatus. A re-encryption key storage means stores a re-encryption key used for re-encrypting the post-office box's encrypted data into recipient's encrypted data, which is obtained by encrypting the data using a recipient's public key that is different from the post-office box's public key. A re-encryption means re-encrypts the received post-office box's encrypted data to the recipient's encrypted data using the re-encryption key stored in the re-encryption key storage means. A transmission means transmits the re-encrypted recipient's encrypted data to the receiving apparatus.

## Description

### Technical Field

An embodiment according to the present invention relates to a file server apparatus and a file server system.

### Background Art

In general, for example, as a system used for sharing data on a network, a file server system is known. As an example of this file server system, there is a so-called electronic post-office box system. The electronic post-office box system corresponds to a post-office box configured to send/receive electronic data over, for example, a network.

According to this electronic post-office box system, a service of receiving sensitive electronic data (hereinafter referred to as confidential data) on behalf of users is provided to the users.

The electronic post-office box system comprises an electronic post-office box server that provides the electronic post-office box service, a sending apparatus used by a sender who sends confidential data to the electronic post-office box server, and a receiving apparatus used by a recipient who receives the confidential data from the electronic post-office box server.

It should be noted that, in the electronic post-office box system, dealing with the confidential data can be considered as described above, and hence the confidential data must be encrypted and thereafter used. As a system for encrypting this confidential data, there are generally known common key cryptography (system) that uses a key which is common (a common key) to encryption and decryption and public key cryptography (system) that uses individual keys (a public key and a secret key) for encryption and decryption.

Meanwhile, in the electronic post-office box system, it is considered that an unspecified number of people are senders. Therefore, in the electronic post-office box system, when the common key cryptography is used, a recipient and the unspecified number of senders must share a common key in advance.

Furthermore, a user who uses the electronic post-office box system may use electronic post-office boxes (services) so that he/she can use them properly in accordance with each use application (or he/she may receive electronic post-office box services from the electronic post-office box servers) in some cases. Therefore, when common key cryptography is used in the electronic post-office box system, each user must manage a key (a common key) for each electronic post-office box (service) to be used, and the total number of keys handled by the user increases.

Therefore, in the case of encrypting confidential data in the electronic post-office box system, sharing a key in advance is not required, and using pubic key cryptography wherein the total number of keys handled by each user is small is desirable.

Moreover, in the electronic post-office box system, it is desirable to use public key cryptography and also meet the following first to third requirements.

The first requirement is that a dedicated public key can be used in the electronic post-office box system. It is assumed that the electronic post-office box system is used for protecting each recipient's privacy. Therefore, the electronic post-office box system requires anonymity of recipients (users). Thus, to assure privacy of each recipient who utilizes the electronic post-office box system, it is desirable to enable using the public key dedicated to the electronic pox-office box so that the recipient cannot be identified from the public key. Further, in a case wherein the same recipient uses electronic post-office box services, it is desirable to meet non-bonding properties wherein a public key used by the same recipient cannot be identified from public keys used in the electronic post-office box services.

The second requirement is that the number of keys managed by each recipient who utilizes the electronic post-office box system is small. For example, when the number of keys managed by each recipient increases, the management of the keys is complicated, and it is less convenient. In particular, when each recipient (user) utilizes many electronic post-office box services, a fewer number of keys to be managed is desirable. That is, it is ideal for the number of keys managed by each recipient to be one irrespective of the number of electronic post-office box services to be utilized.

The third requirement is that the nature of confidential data can be concealed from an electronic post-office box server and an administrator of the server (hereinafter, which will be simply referred to as an administrator). In a model wherein the electronic post-office box server and the administrator are reliable and the nature of confidential data is revealable, use applications of the electronic post-office box are limited. Therefore, it is generally desirable to enable concealing the nature of confidential data from an electronic post-office box server and an administrator. Furthermore, if there is such a scheme wherein the nature of confidential data can be concealed from an electronic post-office box server and an administrator, for example, even if the electronic post-office box server is attacked or the administrator commits a fraudulent activity, its influence can be advantageously reduced.

Here, to meet the first to third requirements, first to third systems utilizing the public key cryptography (technology) can be considered. Hereinafter each of the first to third systems will now be described.

It should be noted that a public key and a secret key in the public key cryptography associated with a recipient who utilizes an electronic post-office box system will be referred to as a recipient's public key and a recipient's secret key in the following description. On the other hand, hereinafter a public key and a secret key in the public key cryptography associated with an electronic post-office box (a server) will be referred to as an electronic post-office box's public key and an electronic post-office box's secret key. Moreover, a pair of a recipient's public key and a recipient's secret key will be referred to as a recipient's key pair, and a pair of an electronic post-office box's public key and an electronic post-office box's secret key will be referred to as an electronic post-office box's key pair, respectively.

The first system is a system wherein a recipient's public key is used as an electronic post-office box's public key as it is in the electronic post-office box system.

Generation and management of keys in the first system will now be described. According to the first system, a recipient's key pair is generated in a receiving apparatus, and a recipient's secret key in the recipient's key pair is safely managed by the receiving apparatus. On the other hand, a recipient's pubic key in the recipient's key pair generated by the receiving apparatus is registered in an electronic post-office box server in order to use this key as an electronic post-office box's public key.

Encryption and decryption processing (a processing sequence) in the first system will now be described. According to the first system, confidential data is encrypted by a sending apparatus using an electronic post-office's public key (= a recipient's public key). The confidential data subjected to encryption (the encrypted confidential data) is sent from the sending apparatus to the electronic post-office box server. The encrypted confidential data supplied from the sending apparatus to the electronic post-office box server is held in the electronic post-office box server without being subjected to processing such as conversion. The encrypted confidential data held in the electronic post-office box server is sent from the electronic post-office box server to the receiving apparatus, and decrypted by the receiving apparatus using the recipient's secret key.

As described above, according to the first system, the receiving apparatus can safely manage the recipient's secret key alone. Therefore, the first system meets the second requirement. Further, according to the first system, the encrypted confidential data cannot be decrypted without the recipient's secret key, and hence any person other than the recipient himself/herself cannot be aware of the nature of the confidential data. Therefore, the first system meets the third requirement.

The second system is a system wherein the receiving apparatus generates an electronic post-office box's key pair and manages an electronic post-office box's secret key in the electronic post-office box's key pair by using the receiving apparatus.

Generation and management of keys in the second system will now be described. According to the second system, the electronic post-office box's key pair is generated in the receiving apparatus, and the electronic post-office box's secret key in the electronic post-office box's key pair is safely managed in the receiving apparatus. On the other hand, an electronic post-office box's public key in the electronic post-office box's key pair generated by the receiving apparatus is registered in the electronic post-office box server. It should be noted that, in the second system, the electronic post-office box's key pair is generated independently from a recipient's key pair or any other electronic post-office box's key pair (i.e., a pair of a public key and a secret key). Furthermore, a system wherein one electronic post-office box's key pair alone is generated and utilized by electronic post-office boxes in common can be considered, but this system is fundamentally the same as the first system.

Moreover, encryption and decryption processing in the second system will now be described. According to the second system, confidential data is encrypted by the sending apparatus using the electronic post-office box's public key. The encrypted confidential data is sent from the sending apparatus to the electronic post-office box server. The encrypted confidential data sent from the sending apparatus to the electronic post-office box server is held in the electronic post-office box server as it is without execution of processing such as conversion. The encrypted confidential data held in the electronic post-office box server is sent from the electronic post-office box server to the receiving apparatus, and decrypted by the receiving apparatus using the electronic post-office box's secret key.

As described above, according to the second system, the electronic post-office box's key pair is generated independently from the recipient's key pair. That is, in the second system, a recipient cannot be identified from (the electronic post-office box's public key in) the electronic post-office box's key pair generated independently from the recipient's key pair. Therefore, the second system meets the first requirement. Moreover, according to the second system, the encrypted confidential data cannot be decrypted without the electronic post-office box's secret key, and hence any person other than the recipient cannot be aware of the nature of the confidential data. Therefore, the second system can meet the third requirement.

The third system is a system wherein the receiving apparatus generates an electronic post-office box's key pair and an electronic post-office box's secret key in the electronic post-office box key's key pair is managed in the electronic post-office box server.

Generation and management of keys in the third system will now be described. According to the third system, the electronic post-office box's key pair is generated in the receiving apparatus. The electronic post-office box's key pair generated in the receiving apparatus is sent to the electronic post-office box server. An electronic post-office box's secret key in the electronic post-office box's key pair sent from the receiving apparatus to the electronic post-office box server is safely managed in the electronic post-office box server. On the other hand, an electronic post-office box's public key in the electronic post-office box's key pair sent from the receiving apparatus to the electronic post-office box server is released. As a result, the electronic post-office box's public key and the electronic post-office box's secret key do not have to be managed in the receiving apparatus. It should be noted that, in the third system, the electronic post-office box's key pair is generated independently from the recipient's key pair or any other electronic post-office box's key pair. Moreover, the recipient's public key is registered in the electronic post-office box server. It should be noted that the description has been given with respect to the example wherein the electronic post-office box's key pair is generated in the receiving apparatus here, but the electronic post-office's key pair may be generated in the electronic post-office box server.

Encryption and decryption processing in the third system will now be described. The confidential data is encrypted by the sending apparatus using the electronic post-office box's public key. The encrypted confidential data is sent from the sending apparatus to the electronic post-office box server. The encrypted data sent from the sending apparatus to the electronic post-office box server is encrypted by the electronic post-office box server using the electronic post-office box's secret key. Additionally, the confidential data obtained by decryption is encrypted by the electronic post-office box server using the recipient's public key. As a result, the electronic post-office box server regenerates (recreates) the encrypted confidential data. The regenerated encrypted confidential data is sent to the receiving apparatus from the electronic post-office box server, and decrypted by the receiving apparatus using the recipient's secret key.

As described above, according to the third system, the electronic post-office box's key pair is generated independently from the recipient's key pair. That is, in the third system, a recipient cannot be identified from (the electronic post-office box's public key in) the electronic post-office box's key pair generated independently from the recipient's key pair. Therefore, the third system meets the first requirement. Additionally, according to the third system, the receiving apparatus can safely manage the recipient's secret key alone. Thus, the third system meets the second requirement.

### Citation List

### Patent Literature

Patent Literature 1: Japanese Patent No. 4010766 Non-patent Literature

Non-patent Literature 1: M. Blaze, G. Bleumer, M. Strauss, Divertible Protocols and Atomic Proxy Cryptography. In Eurocrypt' 98, LNCS 1403, pp. 127-144, 1998

### Summary of Invention

### Technical Problem

As described above, the first system meets the second and third requirements. However, in the first system, since the recipient's public key is used as the electronic post-office box's public key as it is, and hence a recipient may be possibly identified from the recipient's public key. Therefore, the first system does not meet the first requirement.

Further, the second system meets the first and third requirements. However, in the second system, the secret keys (the electronic post-office box's secret keys) corresponding to the electronic post-office box services utilized by a recipient in number must be safely managed by the receiving apparatus. Therefore, the second system does not meet the second requirement.

Furthermore, the third system meets the first and second requirements. However, in the third system, the electronic post-office box server holds the electronic post-office box's secret key, and the encrypted confidential data is decrypted by the electronic post-office box server using the electronic post-office box's secret key. That is, in the third system, the nature of the confidential data cannot be concealed from the electronic post-office box server and an administrator. Therefore, the third system does not meet the third requirement.

That is, a system that meets all of the first to third requirements is not known.

It is, therefore, an object of the present invention to provide a file server apparatus and a file server system that can utilize a dedicated public key, reduce the number of keys managed by a user, and conceal the nature of confidential data.

### Solution to Problem

According to an embodiment, there is provided a file server apparatus connected to a sending apparatus that is used by a sender who sends data; and a receiving apparatus used by a recipient who receives the data.

The file server apparatus according to the embodiment comprises: reception means, re-encryption key storage means, re-encryption means, and transmission means.

The reception means receives post-office box's encrypted data, which is obtained by encrypting the data by using a post-office box's public key, from the sending apparatus.

The re-encryption key storage means stores a re-encryption key used for re-encrypting the post-office box's encrypted data, which is obtained by encrypting data using the post-office box's public key, into recipient's encrypted data, which is obtained by encrypting the data using a recipient's public key that is different from the post-office box's public key and forms a pair with a recipient's secret key managed in the receiving apparatus.

The re-encryption means re-encrypts the received post-office box's encrypted data to the recipient's encrypted data using the re-encryption key stored in the re-encryption key storage means.

The transmission means transmits the re-encrypted recipient's encrypted data to the receiving apparatus.

### Brief Description of Drawings

FIG. 1 is a block diagram mainly showing a functional configuration of an electronic post-office box system according to a first embodiment;
FIG. 2 is a view for explaining a concept of proxy re-encryption technology used in the electronic post-office box system according to the embodiment;
FIG. 3 is a flowchart showing a processing procedure of key generation processing executed in the electronic post-office box system according to the embodiment;
FIG. 4 is a view for conceptually explaining confidential data encryption processing and confidential data decryption processing executed in the electronic post-office box system according to the embodiment;
FIG. 5 is a flowchart showing a processing procedure of the confidential data encryption processing executed in the electronic post-office box system according to the first embodiment;
FIG. 6 is a flowchart showing a processing procedure of the confidential data decryption processing executed in the electronic post-office box system according to the first embodiment;
FIG. 7 is a view for explaining a case where a recipient uses electronic post-office boxes;
FIG. 8 is a view for explaining a case where a recipient uses electronic post-office box servers 20;
FIG. 9 is a block diagram mainly showing a functional configuration of an electronic post-office box system according to a second embodiment;
FIG. 10 is a flowchart showing a processing procedure of confidential data encryption processing executed in the electronic post-office box system according to the second embodiment; and
FIG. 11 is a flowchart showing a processing procedure of confidential data decryption processing executed in the electronic post-office box system according to the second embodiment.

Description of Embodiments Hereinafter each embodiment will now be described with reference to the drawings.

### (First Embodiment)

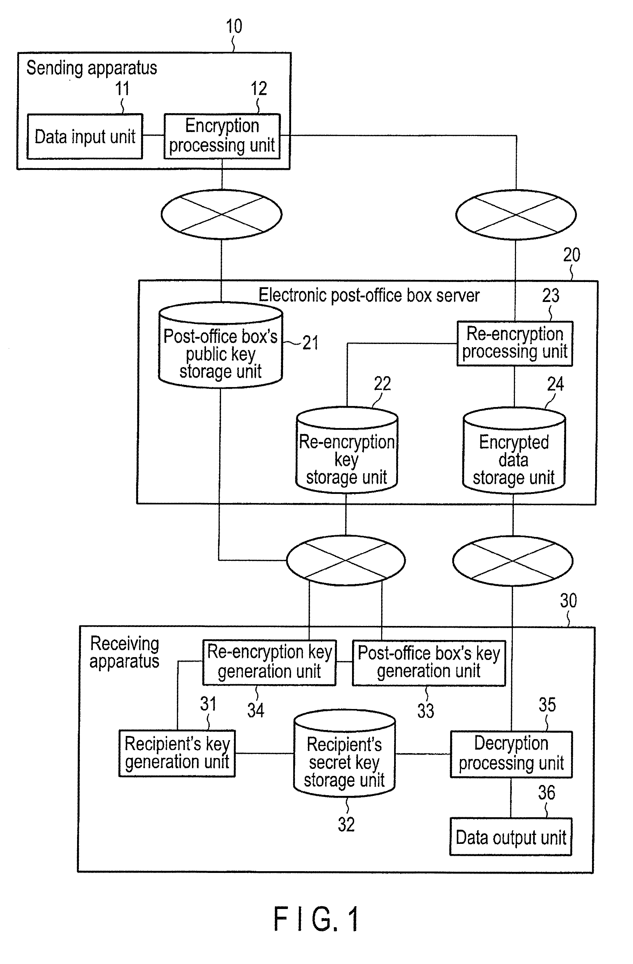

A configuration of a file server system according to a first embodiment will now be described with reference to FIG. 1. As the file server system according to this embodiment, for example, a so-called electronic post-office box system corresponding to a post-office box configured to send/receive electronic data on a network is assumed. A description will be given on the assumption that the file server system according to this embodiment is the electronic post-office box system. This is likewise applied to the following embodiment.

FIG. 1 is a block diagram mainly showing a functional configuration of an electronic post-office box system according to this embodiment.

As shown in FIG. 1, the electronic post-office box system comprises a sending apparatus 10, an electronic post-office box server (a file server apparatus) 20, and a receiving apparatus 30. It should be noted that each of the sending apparatus 10, the electronic post-office box server 20, and the receiving apparatus 30 is realized as a hardware configuration or a combined configuration of hardware and software that realizes each function of each apparatus. The software is constituted of a program that is installed from a storage medium or a network in advance and allows each apparatus 10, 20, or 30 to realize its function.

The sending apparatus 10 is used by a sender who sends confidential data which is electronic data that cannot be shown to strangers. The electronic post-office box server 20 provides a service (an electronic post-office box service) for receiving the confidential data from the sending apparatus 10 as deputy and transferring it to the receiving apparatus 30. It should be noted that the electronic post-office box server 20 is connected to the sending apparatus 10 and the receiving apparatus 30 through the network. The receiving apparatus 30 is used by a recipient who receives the confidential data.

The sending apparatus 10 includes a data input unit 11 and an encryption processing unit 12. The data input unit 11 inputs confidential data in response to an operation (a request) from a sender who uses the sending apparatus 10.

The encryption processing unit 12 encrypts the confidential data input by the data input unit 11 (hereinafter which will be simply referred to as confidential data) by using a post-office box's public key (an electronic post-office box's public key). The post-office box's public key used by the encryption processing unit 12 is acquired from the electronic post-office box server 20. The encryption processing unit 12 sends confidential data (i.e., encrypted confidential data), which is obtained by encrypting the confidential data using the post-office box's public key, to the electronic post-office box server 20. Hereinafter the encrypted confidential data obtained by encrypting the confidential data using the post-office box's public key will be referred to as a post-office box's encrypted confidential data.

The electronic post-office box server 20 comprises a post-office box's public key storage unit 21, a re-encryption key storage unit 22, a re-encryption processing unit 23, and an encrypted data storage unit 24.

The post-office box's public key storage unit 21 stores each post-office box's public key. This post-office box's public key is used by the encryption processing unit 12 included in the sending apparatus 10.

The re-encryption key storage unit 22 stores each re-encryption key. The re-encryption key stored in the re-encryption key storage unit 22 is used to re-encrypt the encrypted confidential data obtained by encrypting the confidential data using the post-office box's public key stored in the post-office box's public key storage unit 21 (i.e., the post-office box's encrypted confidential data) into encrypted confidential data obtained by encrypting the confidential data using a recipient's public key different from the post-office box's public key (hereinafter which will be referred to as recipient's encrypted confidential data). It should be noted that the recipient's public key is a public key that forms a pair with a recipient's secret key managed in the receiving apparatus 30 as will be described later.

The re-encryption processing unit 23 receives the post-office box's encrypted confidential data sent by the encryption processing unit 12 included in the sending apparatus 10.

The re-encryption processing unit 23 re-encrypts the received post-office box's encrypted confidential data into the recipient's encrypted confidential data using the re-encryption key stored in the re-encryption key storage unit 22.

The encrypted data storage unit 24 stores the recipient's encrypted confidential data re-encrypted by the re-encryption processing unit 23 (i.e., the recipient's encrypted confidential data obtained by re-encrypting the post-office box's encrypted confidential data using the re-encryption key). It should be noted that the recipient's encrypted confidential data stored in the encrypted data storage unit 24 is sent from the electronic post-office box server 20 to the receiving apparatus 30 in response to, for example, a request from (a user who uses) the receiving apparatus 30.

The receiving apparatus 30 comprises a recipient's key generation unit 31, a recipient's secret key storage unit 32, a post-office box's key generation unit 33, a re-encryption key generation unit 34, a decryption processing unit 35, and a data output unit 36.

The recipient's key generation unit 31 generates a recipient's public key and a recipient's secret key which forms a pair with the recipient's public key.

The recipient's secret key storage unit 32 stores the recipient's secret key generated by the recipient's key generation unit 31.

The post-office box's key generation unit 33 generates the post-office box's public key and a post-office box's secret key which forms a pair with the post-office box's public key. The post-office box's key generation unit 33 sends the generated post-office box's public key to the electronic post-office box server 20. It should be noted that the post-office box's public key sent by the post-office box's key generation unit 33 is stored in the post-office box's public key storage unit 21 included in the electronic post-office box server 20.

The re-encryption key generation unit 34 generates a re-encryption key by using the recipient's public key and the recipient's secret key generated by the recipient's key generation unit 31 and the post-office box's public key and the post-office box's secret key generated by the post-office box's key generation unit 33. The re-encryption key generated by this re-encryption key generation unit 34 is a key which is used for re-encrypting the post-office box's encrypted confidential data into the recipient's encrypted confidential data.

The re-encryption key generation unit 34 sends the generated re-encryption key to the electronic post-office box server 20. The re-encryption key sent by the re-encryption key generation unit 34 is stored in the re-encryption key storage unit 22 included in the electronic post-office box server 20.

The decryption processing unit 35 acquires recipient encrypted confidential data (the recipient encrypted confidential data sent from the electronic post-office box server 20) stored in the encrypted data storage unit 24 included in the electronic post-office box server 20. The decryption processing unit 35 decrypts the acquired recipient's encrypted confidential data by using the recipient's secret key stored in the recipient's secret key storage unit 32.

The data output unit 36 outputs confidential data decrypted by the decryption processing unit 35 (i.e., the confidential data obtained by decrypting the recipient's encrypted confidential data).

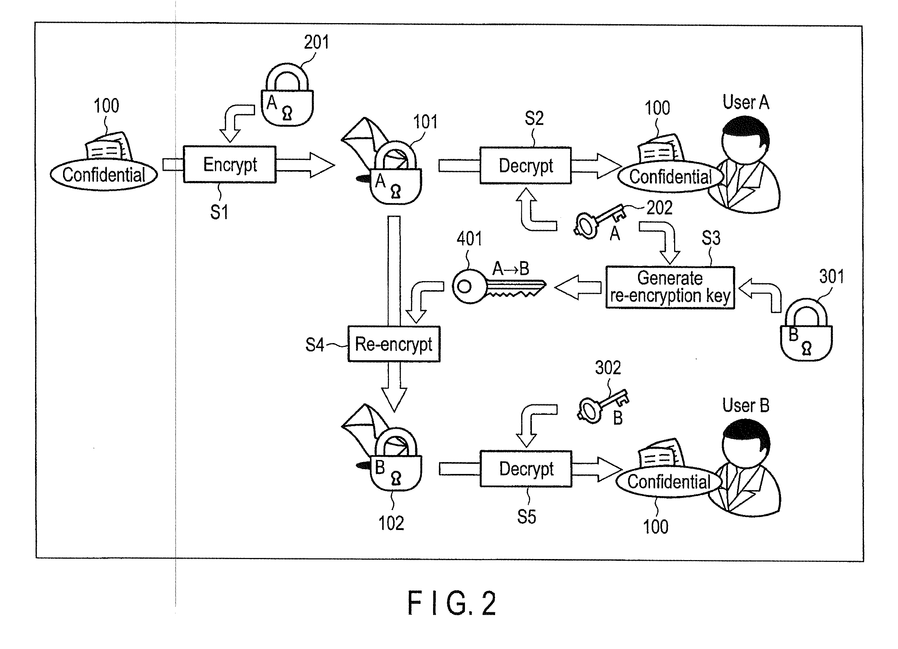

The concept of proxy re-encryption technology used in the electronic post-office box system according to this embodiment will now be described with reference to FIG. 2.

Here, a description will be given with respect to a case where users A and B decrypt confidential data (a message) 100 while protecting the confidential data 100 by encrypting the data.

First, the confidential data 100 is encrypted by using a user A's public key 201 (step S1). As a result, user A's encrypted confidential data 101 is obtained. It should be noted that the user A's public key is a public key associated with user A, and it is also a key used for encrypting the confidential data 100. The user A's public key 201 is public information, and anyone can encrypt data by using the user A's public key 201.

Then, user A decrypts the user A's encrypted confidential data 101 by using a user A's secret key 202 (step S2). As a result, user A can obtain the confidential data 100. It should be noted that the user A's secret key 202 is a key that forms a pair with the user A's public key 201 associated with user A, and it is also a key used for decrypting encrypted confidential data obtained by encryption using the user A's public key 201. The user A's secret key 202 is private information, and only a person who knows the user A's secret key 202 can decrypt data.

Further, for example, a re-encryption key 401 is generated using the user A's secret key 202 and a user B's public key 301 or the like (step S3). The re-encryption key 401 is a key which is used for re-encrypting (converting) the user A's encrypted confidential data 101 into user B's encrypted confidential data 102. The user B's encrypted confidential data 102 is encrypted confidential data obtained by encrypting the data 100 using a public key associated with user B (a user B's public key 301). It should be noted that generation of the re-encryption key 401 requires user A's approval since the user A's secret key 202 is used.

It should be noted that the description has been given with respect to the case wherein the re-encryption key 401 is generated using the user A's secret key 202 and the user B's public key 301 here, but the re-encryption key 401 may be generated using the user A's public key 201 and the user B's secret key 301 in addition to these keys 202 and 301.

Then, the user A's encrypted confidential data 101 is re-encrypted using the re-encryption key 401 (step S4). As a result, the user A's encrypted confidential data 101 is re-encrypted into the user B's encrypted confidential data 102. It should be noted that, even if the re-encryption key 401 is used, the user A's encrypted confidential data cannot be decrypted.

User B decrypts the user B's encrypted confidential data 102 by using a user B's secret key 302 (step S5). As a result, user B can obtain the confidential data 100.

As described above, according to the proxy re-encryption technology, for example, the user A's encrypted confidential data 101 can be re-encrypted into the user B's encrypted confidential data 102 without decrypting the user A's encrypted confidential data 101.

Signs used in the proxy re-encryption will now be explained.

This proxy re-encryption is the concept concerning a public key encryption system, and a basic model consists of five functions, i.e., key generation, encryption, decryption, re-encryption key generation, and re-encryption. It should be noted that the key generation, the encryption, and the decryption are the same as those in general public key cryptography.

According to a key generation algorithm KeyGen in the proxy re-encryption, a security parameter 1^{k} is input, and a pair (pk, sk) of a public key pk and a secret key sk is output. That is, KeyGen(1^{k})→(pk, sk) is achieved.

According to an encryption algorithm Enc in the proxy re-encryption, a public key pk_{A} of a target A (for example, user A) and confidential data (plaintext) mare input, and the user A's encrypted confidential data (ciphertext) C_{A} is output. That is, Enc(pk_{A}, m)→C_{A} is achieved.

According to a decryption algorithm Dec in the proxy re-encryption, a user A's secret key sk_{A} and the user A's encrypted confidential data C_{A} are input, and the confidential data m is output. That is, Dec(sk_{A}, C_{A})→m is achieved.

According to a re-encryption key generation algorithm ReKeyGen in the proxy re-encryption, for example, the user A's public key pk_{A}, the user A's secret key sk_{A}, a user B's public key pk_{B}, and a user B's secret key sk_{B} are input, and a re-encryption key rk_{A→B} is output. That is, ReKeyGen(pk_{A}, sk_{A}, pk_{B}, sk_{B})→rk_{A→B} is achieved.

According to a re-encryption algorithm ReEnc in the proxy re-encryption, the re-encryption key rk_{A→B} and the user A's encrypted confidential data C_{A} are input, and user B's encrypted confidential data (ciphertext) C_{B} is output. That is, ReEnc(rk_{A→B}, C_{A})→C_{B} is achieved.

Although the key generation, the encryption, the decryption, the re-encryption key generation, and the re-encryption constitute the basic model, a case where inputs to functions are different or a case where other functions or keys than those described above are included may be present depending on an implementation system.

Specifically, there is, for example, a model called non-interactive which does not require sk_{B} for input of the re-encryption key generation algorithm.

Furthermore, there are also a model called unidirectional wherein the user A's encrypted confidential data C_{A} can be encrypted into the user B's encrypted confidential data C_{B} by using the re-encryption key rk_{A→B} but, on the other hand, the user B's encrypted confidential data C_{B} cannot be re-encrypted into the user A's encrypted confidential data C_{A;} and a model called bidirectional wherein the user A's encrypted confidential data C_{A} and the user B's encrypted confidential data C_{B} can be mutually re-encrypted by using the re-encryption key rk_{A→B}. It should be noted that, in the bidirectional model, the re-encryption key rk_{A→B} may be represented as rk_{A↔B} in some cases.

Furthermore, in the public key cryptography, there is a system based on ID base cryptography. In this case, the function Setup for master key generation is included, and a master key and an ID are added to the input of the key generation KeyGen. It should be noted that, in the ID base cryptography, the public key pk is an ID itself.

An operation of the electronic post-office box system according to this embodiment will now be described. In the electronic post-office box system according to this embodiment, three types of processing, i.e., key generation processing, confidential data encryption processing, and confidential data decryption processing are executed. Each of the key generation processing, the confidential data encryption processing, and the confidential data decryption processing will now be described.

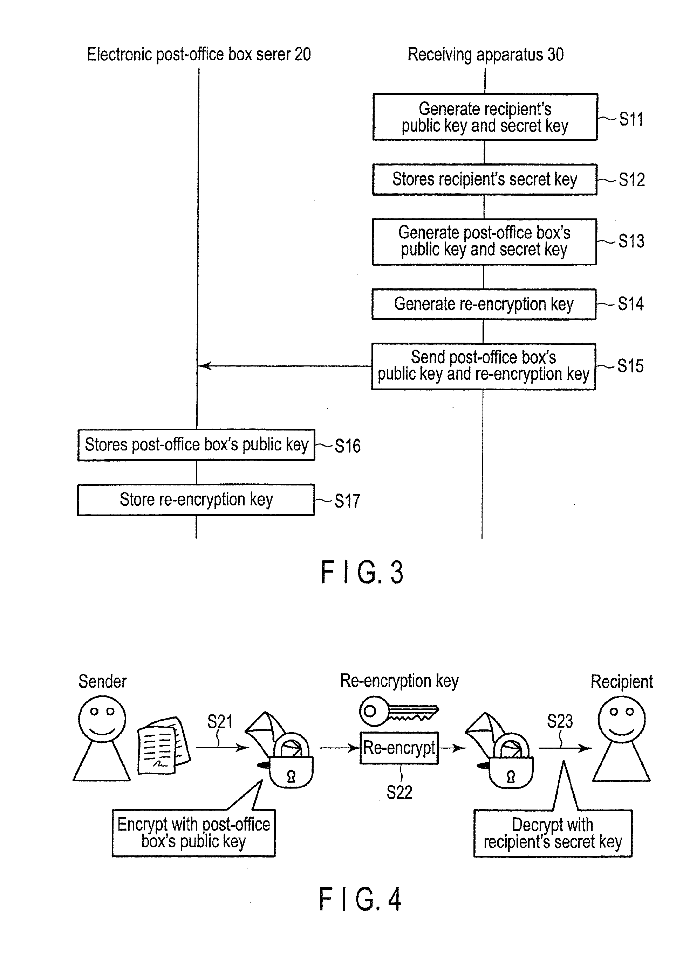

First, a description will be given with respect to a processing procedure of the key generation processing executed in the electronic post-office box system according to this embodiment with reference to a flowchart of FIG. 3. This key generation processing is executed as preprocessing of the confidential data encryption processing and the confidential data decryption processing which will be described later.

The recipient's key generation unit 31 included in the receiving apparatus 30 executes KeyGen(1^{k}) and thereby generates a recipient's public key (pk_{RCV}) and a recipient's secret key (sk_{RCV}) (step S11).

The recipient's key generation unit 31 stores the generated recipient's secret key in the recipient's secret key storage unit 32 (step S12). It should be noted that the recipient's public key generated by the recipient's key generation unit 31 is released.

It should be noted that, when the recipient's public key and the recipient's secret key have been already generated and the recipient's secret key has been stored in the recipient's secret key storage unit 32, steps S11 and S12 are not executed.

Then, the post-office box's key generation unit 33 executes KeyGen(1^{k}) and thereby generates a post-office box's public key (pk_{BOX}) and a post-office box's secret key (sk_{BOX}) (step S13).

The re-encryption key generation unit 34 executes ReKeyGen(pk_{BOX}, sk_{BOX}, pk_{RCV}, sk_{RCV}) to generate a re-encryption key (rk_{BOX→RCV}) (step S14). That is, the re-encryption key generation unit 34 generates the re-encryption key by using the recipient's public key and the recipient's secret key generated by the recipient's key generation unit 31 and the post-office box's public key and the post-office box's secret key generated by the post-office box's key generation unit 33.

The re-encryption key is used for re-encrypting encrypted confidential data encrypted using the post-office box's public key (post-office box's encrypted confidential data) into encrypted confidential data encrypted using the recipient's public key (recipient's encrypted confidential data).

It should be noted that, when the re-encryption key is generated by the re-encryption key generation unit 34, the post-office box's secret key (sk_{BOX}) generated by the post-office box's key generation unit 33 may be deleted.

Then, (the post-office box's key generation unit 33 and the re-encryption key generation unit 34 included in) the receiving apparatus 30 sends the post-office box's public key generated by the post-office box's key generation unit 33 and the re-encryption key generated by the re-encryption key generation unit 34 to the electronic post-office box server 20 (step S15).

The electronic post-office box server 20 receives the post-office box's public key and the re-encryption key sent from the receiving apparatus 30.

The post-office box's public key received by the electronic post-office box server 20 is stored in the post-office box's public key storage unit 21 included in the electronic post-office box server 20 (step S16).

Additionally, the re-encryption key received by the electronic post-office box server 20 is stored in the re-encryption key storage unit 22 included in the electronic post-office box server 20 (step S17). When the processing of step S17 is executed, the key generation processing is terminated.

The confidential data encryption processing and the confidential data decryption processing executed in the electronic post-office box system according to this embodiment will now be conceptually explained with reference to FIG. 4.

First, in the confidential data encryption processing, confidential data is encrypted by using the post-office box's public key (step S21). As a result, post-office box's encrypted confidential data is obtained.

Then, the post-office box's encrypted confidential data is re-encrypted (converted) into recipient's encrypted confidential data by using a re-encryption key (step S22).

Further, in the confidential data decryption processing, the recipient's encrypted confidential data is decrypted by using a recipient's secret key.

When the confidential data encryption processing and the confidential data decryption processing are executed in this manner, the number of keys managed by a receiving apparatus can be reduced while maintaining confidentiality of data and privacy of the recipient in the electronic post-office box system according to this embodiment.

Hereinafter the confidential data encryption processing and the confidential data decryption processing executed in the electronic post-office box system according to this embodiment will now be described in detail.

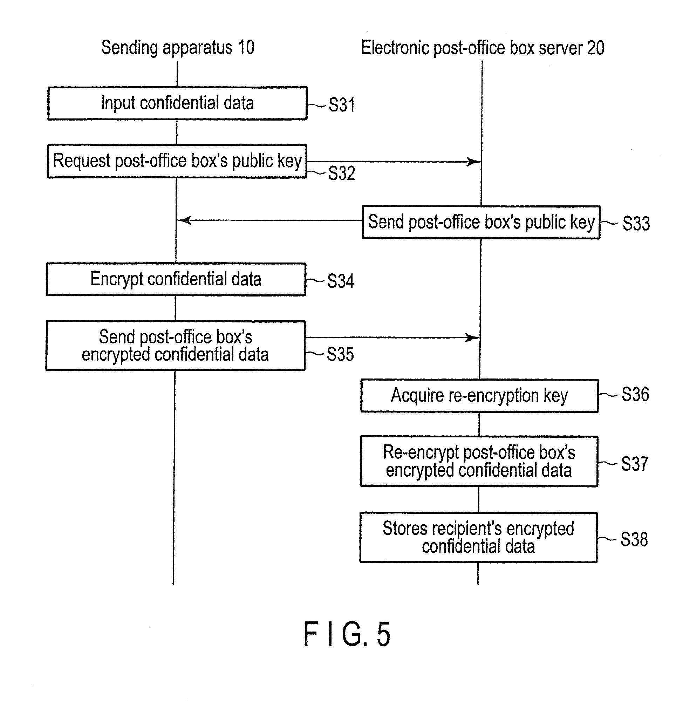

A processing procedure of the confidential data encryption processing executed in the electronic post-office box system according to this embodiment will now be described with reference to a flowchart of FIG. 5.

First, the data input unit 11 included in the sending apparatus 10 inputs confidential data in response to a request (an operation) of a sender who uses the sending apparatus 10 (step S31).

The encryption processing unit 12 issues a request for acquiring the post-office box's public key (pk_{BOX}) stored in the post-office box's public key storage unit 21 included in the electronic post-office box server 20 (step S32) and receives the post-office box's public key sent by the electronic post-office box server 20 (step S33).

The encryption processing unit 12 encrypts the confidential data input by the data input unit 11 using the acquired post-office box's public key (step S34). As a result, the encryption processing unit 12 acquires the confidential data encrypted using the post-office box's public key (i.e., the post-office box's encrypted confidential data). That is, the encryption processing unit 12 executes Enc(pk_{BOX}, m) mentioned above and acquires post-office box's encrypted confidential data (C_{BOX}) as its output.

The encryption processing unit 12 sends the acquired post-office box's encrypted confidential data to the electronic post-office box server 20 (step S35).

The re-encryption processing unit 23 included in the electronic post-office box server 20 receives the post-office box's encrypted confidential data sent by the encryption processing unit 12 included in the sending apparatus 10. Upon receiving the post-office box's encrypted confidential data, the re-encryption processing unit 23 acquires a re-encryption key (rk_{BOX→RCV}) stored in the re-encryption key storage unit 22 (step S36).

Subsequently, the re-encryption processing unit 23 re-encrypts the received post-office box's encrypted confidential data into the recipient's encrypted confidential data by using the acquired re-encryption key (step S37). As a result, the re-encryption processing unit 23 acquires the recipient's encrypted confidential data. That is, the re-encryption processing unit 23 executes ReEnc(rk_{BOX→RCV}, C_{BOX}) described above and acquires the recipient's encrypted confidential data (C_{RCV}) as its output.

It should be noted that, even if the re-encryption processing has been executed using the re-encryption key, the post-office box's encrypted confidential data and the recipient's encrypted confidential data are not decrypted.

The re-encryption processing unit 23 stores the acquired recipient's encrypted confidential data in the encrypted data storage unit 24 (step S38). When the processing of step S38 has been executed, the confidential data encryption processing is terminated.

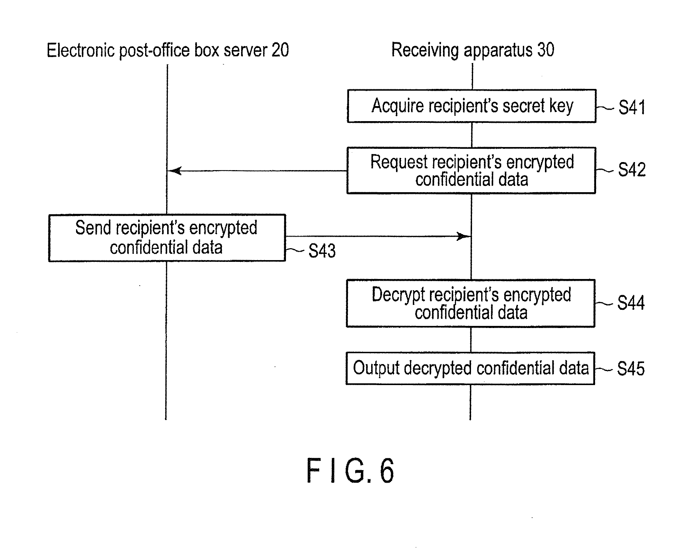

A processing procedure of the confidential data decryption processing will now be described with reference to a flowchart of FIG. 6. This confidential data decryption processing is executed in response to a request from a recipient who uses the receiving apparatus 30, for example.

First, the decryption processing unit 35 of the receiving apparatus 30 acquires a recipient's secret key (sk_{RCV}) stored in the recipient's secret key storage unit 32 (step S41).

The decryption processing unit 35 issues a request for acquiring recipient's encrypted confidential data (C_{RCV}) stored in the encrypted data storage unit 24 included in the electronic post-office box server 20 (step S42) and receives the recipient's encrypted confidential data sent from the electronic post-office box server 20 (step S43). The recipient's encrypted confidential data stored in the encrypted data storage unit 24 is sent from the electronic post-office box server 20 in response to, for example, a request from a recipient. As a result, the decryption processing unit 35 acquires the recipient's encrypted confidential data.

Then, the decryption processing unit 35 decrypts the recipient's encrypted confidential data acquired in step S43 by using the recipient's secret key acquired in step S41 (step S44). That is, the decryption processing unit 35 executes Dec(sk_{RCV}, C_{RCV}) mentioned above and acquires decrypted confidential data (m) as its output.

The data output unit 36 outputs the confidential data acquired by the decryption processing unit 35 (the decrypted confidential data) (step S45). When the processing in step S45 has been executed, the confidential data decryption processing is terminated.

As described above, in this embodiment, the confidential data is encrypted by using the post-office box's public key in the sending apparatus, the post-office box's encrypted confidential data is re-encrypted into the recipient's encrypted confidential data by using the re-encryption key in the file server apparatus (the electronic post-office box server) 20, the recipient's encrypted data is decrypted using the recipient's secret key in the receiving apparatus, and the confidential data obtained by the decryption is output.

As a result, in this embodiment, since the post-office box's public key is used in place of the recipient's public key in the sending apparatus 10, a recipient is not identified from the recipient's public key, and privacy of the recipient can be assured.

Additionally, in this embodiment, the key that should be managed in the receiving apparatus 30 is the recipient's secret key alone, the number of keys managed by the receiving apparatus is small, and it is more convenient.

Further, in this embodiment, the post-office box's encrypted confidential data alone is re-encrypted into the recipient's encrypted confidential data using the re-encryption key in the electronic post-office box server (the file server apparatus) 20, the post-office box's encrypted confidential data and the recipient's encrypted confidential data are not decrypted, and hence the nature of the confidential data can be concealed from the file server apparatus 20 and its administrator.

Furthermore, in this embodiment, since the recipient's encrypted confidential data is stored in the encrypted data storage unit 24, there is a merit that the speed of responding to a request for acquiring the recipient's encrypted confidential data from the receiving apparatus 30 is high.

Therefore, in this embodiment, the dedicated public key (i.e., the post-office box's public key) can be used in place of the recipient's public key, the number of keys managed by a recipient (user) can be reduced, and the nature of the confidential data can be concealed from the file server apparatus 20 and its administrator.

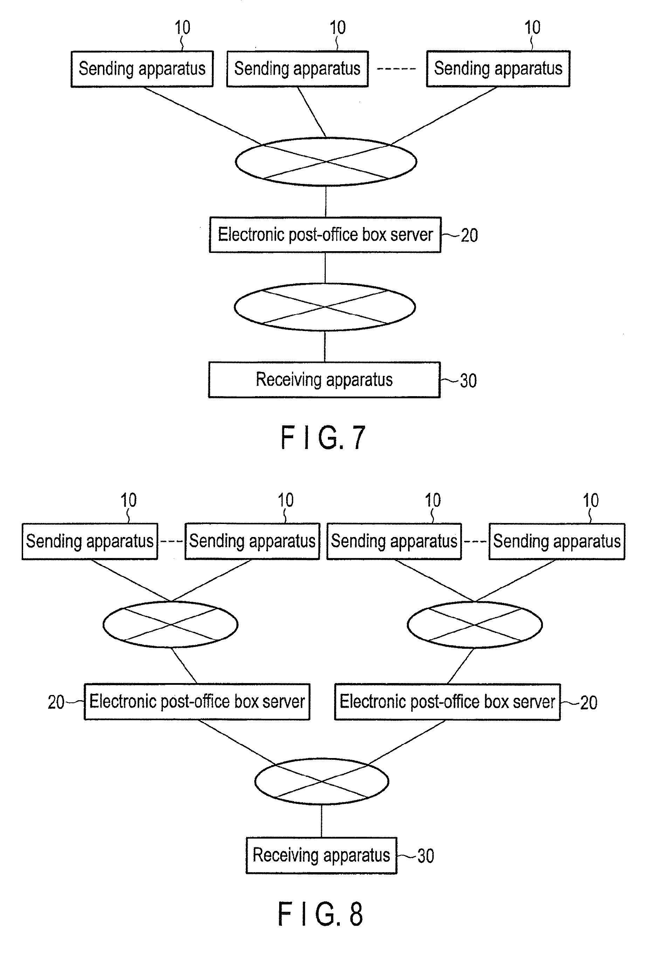

It should be noted that the description has been given with respect to the case where the recipient who utilizes the receiving apparatus 30 (and the sender who utilizes the sending apparatus 10) uses one electronic post-office box (service) in this embodiment, but the recipient may use the electronic post-office boxes in one electronic post-office box server 20. In this case, as shown in FIG. 7, the sender who uses each of the sending apparatuses 10 can send data to the electronic post-office boxes in one electronic post-office box server 20.

Additionally, as shown in FIG. 8, the recipient may use the electronic post-office box servers 20. Further, the electronic post-office box servers 20 may provide the electronic post-office boxes (services).

Furthermore, although the description has been given with respect to the case where the recipient's public key (pk_{RCV}) is released in this embodiment, but the recipient's public key may not be released, and a set (pair) of the recipient's public key and the recipient's secret key (pk_{RCV}, sk_{RCV}) may be managed in the receiving apparatus 30.

Moreover, in this embodiment, although the description has been given with respect to the case where (the encryption processing unit 12 included in) the sending apparatus 10 acquires the post-office box's public key from (the post-office box's public key storage unit 21 included in) the electronic post-office box server 20 in the confidential data encryption processing, the sending apparatus 10 may acquire the post-office box's public key online as required, or the post-office box's public key may be acquired in advance and locally stored, for example.

Additionally, in this embodiment, although the description has been given with respect to the case where the recipient's encrypted confidential data is acquired in response to a request from the recipient in the confidential data decryption processing, the method of acquiring the recipient's encrypted confidential data may be of a pull type wherein the receiving apparatus 30 acquires the recipient's encrypted confidential data in response to a request from the recipient or a push type wherein the electronic post-office box server 20 sends the recipient's encrypted confidential data to the receiving apparatus 30 after the re-encryption processing.

Further, in this embodiment, although the description has been given with respect to the case wherein the recipient's encrypted confidential data re-encrypted by the re-encryption processing unit 23 is stored in the encrypted data storage unit 24, the recipient's encrypted confidential data may be transferred (sent) to the receiving apparatus 30 without being stored in the encrypted data storage unit 24.

Furthermore, in this embodiment, although the description has been given with respect to the case wherein the post-office box's public key and the post-office box's secret key (pk_{BOX}, sk_{BOX}) are generated by (the post-office box's key generation unit 33 included in) the receiving apparatus 30, the post-office box's public key and the post-office box's secret key may be generated by the electronic post-office box server 20 side. In this case, to generate the re-encryption key in the receiving apparatus 30, the post-office box's public key and the post-office box's secret key generated in the electronic post-office box server 20 are sent to the receiving apparatus 30. It should be noted that, if the proxy re-encryption of the model called "non-interactive" is used, the receiving apparatus 30 can send the recipient's public key (pk_{RCV}) to the electronic post-office box server 20 so that the re-encryption key can be generated in the electronic post-office box server 20.

Furthermore, as for the proxy re-encryption used in this embodiment, a non-ID-based system may be used, or an ID-based system may be used.

### (Second Embodiment)

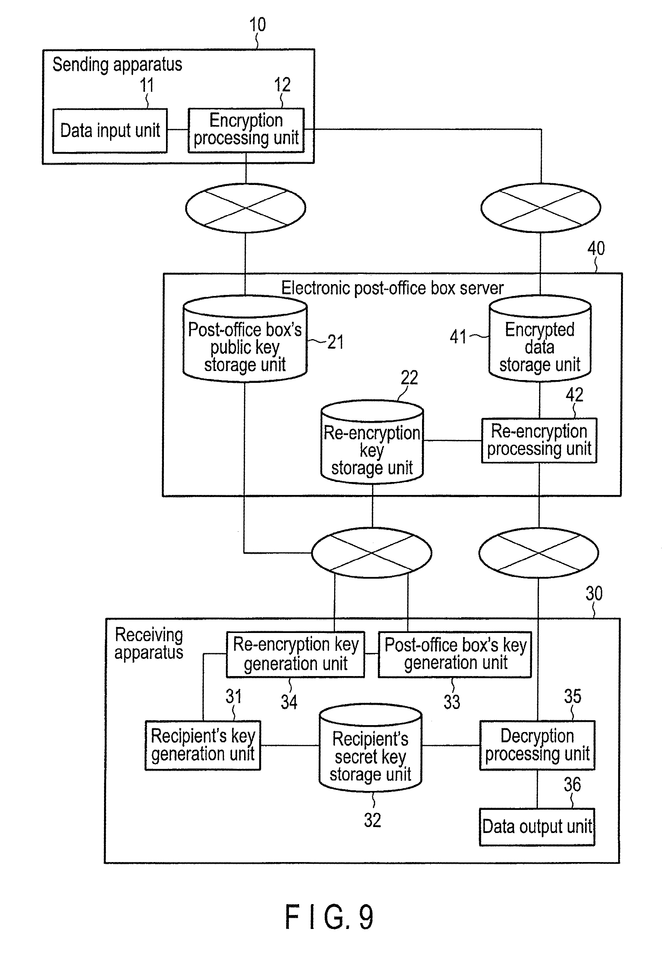

A configuration of an electronic post-office box system (a file server system) according to a second embodiment will now be described with reference to FIG. 9 to FIG. 11. It should be noted that like reference numbers denote parts equal to those in FIG. 1, FIG. 5, and FIG. 6, thereby omitting a detailed description thereof. A description will be mainly given with respect to the respective differences between FIG. 9 to FIG. 11 and FIG. 1, FIG. 5, and FIG. 6.

This embodiment is different from the first embodiment in that post-office box's encrypted confidential data is stored in an electronic post-office box server provided in an electronic post-office box system.

As shown in FIG. 9, an electronic post-office box system according to this embodiment comprises an electronic post-office box server (a file server apparatus) 40.

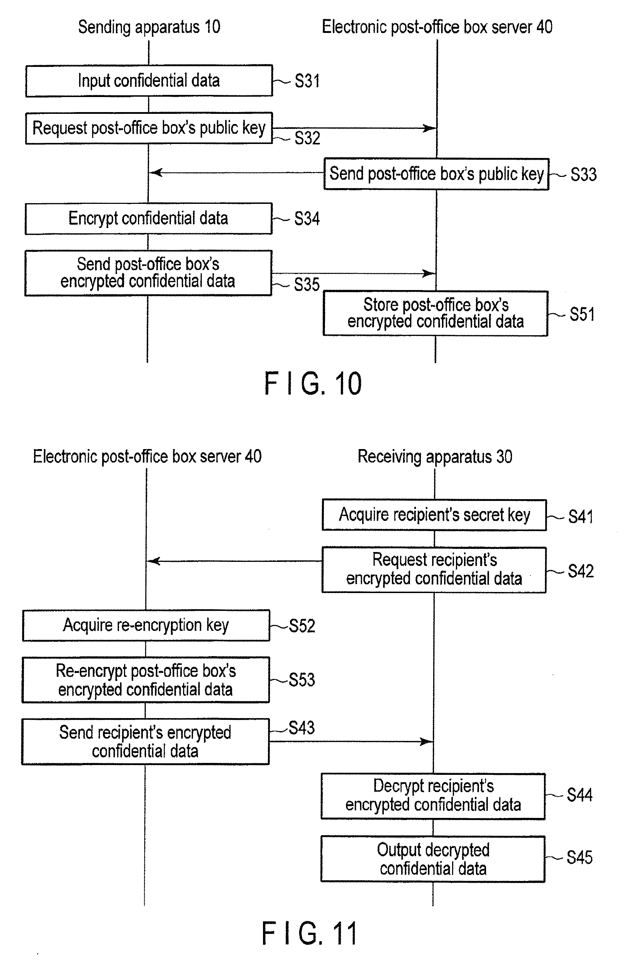

The electronic post-office box server 40 comprises an encrypted data storage unit 41 and a re-encryption processing unit 42. As shown in FIG. 10, the encrypted data storage unit 41 stores post-office box's encrypted confidential data sent from an encryption processing unit 12 included in a sending apparatus 10 as different from FIG. 5 (step S51).

As shown in FIG. 11, the re-encryption processing unit 42 acquires a re-encryption key (rk_{BOX→RCV}) stored in a re-encryption key storage unit 22 in response to, for example, a request from (a recipient who uses) a receiving apparatus 30 as different from FIG. 6 (step S52) and re-encrypts the post-office box's encrypted confidential data stored in the encrypted data storage unit 41 into recipient's encrypted confidential data (step 53). It should be noted that the re-encryption processing unit 42 executes the re-encryption processing by using a re-encryption key stored in the re-encryption key storage unit 22 as in the first embodiment.

The recipient's encrypted confidential data re-encrypted by the re-encryption processing unit 42 is decrypted by a decryption processing unit 35 included in the receiving apparatus 30 as in the first embodiment.

As described above, in this embodiment, the encrypted data storage unit 41 included in the electronic post-office box server 40 stores the post-office box's encrypted confidential data, and the post-office box's encrypted confidential data stored in the encrypted data storage unit 41 is re-encrypted into the recipient's encrypted confidential data in response to a request from a recipient.

As a result, in this embodiment, as in the first embodiment, a dedicated public key can be used in place of a recipient's public key, the number of keys managed by each receiving apparatus can be reduced, and the nature of confidential data can be concealed from the electronic post-office box server (the file server apparatus) 20 and an administrator thereof.

Furthermore, in this embodiment, since the encrypted data storage unit 24 stores the post-office box's encrypted confidential data, there is a merit that data stored in the encrypted data storage unit 24 does not have to be updated even if a recipient's public key and a recipient's secret key are changed.

It should be noted that, in this embodiment, as in the first embodiment, the description has been given with respect to the case wherein a recipient who uses the receiving apparatus 30 (and a sender who uses the sending apparatus 10) uses one electronic post-office box (service), the recipient may use electronic post-office boxes in one electronic post-office box server 20. In this case, as shown in FIG. 7, the sender who uses each of the sending apparatuses 10 can send data to the electronic post-office boxes in one electronic post-office box server 20.

Moreover, as shown in FIG. 8, the recipient may use the electronic post-office box servers 20. Additionally, the electronic post-office box servers 20 may provide the electronic post-office boxes (services).

Further, in this embodiment, as in the first embodiment, the description has been given with respect to the case where the recipient's public key (pk_{RCV}) is released, a set (pair) of the recipient's public key and a recipient's secret key (pk_{RCV}, sk_{RCV}) may be managed in the receiving apparatus 30.

Furthermore, in this embodiment, as in the first embodiment, the description has been given with respect to the case where (the encryption processing unit 12 included in) the sending apparatus 10 acquires the post-office box's public key from (the post-office box's public key storage unit 21 included in) the electronic post-office box server 20 in the confidential data encryption processing, but the sending apparatus 10 may acquire the post-office box's public key online as required, or the post-office box's public key may be acquired in advance and locally stored, for example.

Moreover, in this embodiment, as in the first embodiment, although the description has been given with respect to the case where the recipient's encrypted confidential data is acquired in response to a request from the recipient in the confidential data decryption processing, the method of acquiring the recipient's encrypted confidential data may be of a pull type wherein the receiving apparatus 30 acquires the recipient's encrypted confidential data in response to a request from the recipient or a push type wherein the electronic post-office box server 20 sends the recipient's encrypted confidential data to the receiving apparatus 30 after the re-encryption processing.

Additionally, in this embodiment, as in the first embodiment, although the description has been given with respect to the case wherein the recipient's encrypted confidential data re-encrypted by the re-encryption processing unit 23 is stored in the encrypted data storage unit 24, the recipient's encrypted confidential data may be transferred (sent) to the receiving apparatus 30 without being stored in the encrypted data storage unit 24.

Furthermore, in this embodiment, as in the first embodiment, although the description has been given with respect to the case wherein the post-office box's public key and the post-office box's secret key (pk_{BOX}, sk_{BOX}) are generated by (the post-office box's key generation unit 3 included in) the receiving apparatus 30, the post-office box's public key and the post-office box's secret key may be generated by the electronic post-office box server 20 side. In this case, to generate the re-encryption key in the receiving apparatus 30, the post-office box's public key and the post-office box's secret key generated in the electronic post-office box server 20 are sent to the receiving apparatus 30. It should be noted that, if the proxy re-encryption of the model called "non-interactive" is used, the receiving apparatus 30 can send the recipient's public key (pk_{RCV}) to the electronic post-office box server 20 so that the re-encryption key can be generated in the electronic post-office box server 20.

Furthermore, as for the proxy re-encryption used in this embodiment, as in the first embodiment, a non-ID-based system may be used, or an ID-based system may be used.

According to at least one embodiment described above, it is possible to provide the file server apparatus (the electronic post-office box server) and the file server system (the electronic post-office box system) that can use a dedicated public key, reduce the number of keys managed by a user, and conceal the contents of a confidential server.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

10 ... sending apparatus, 11 ... data input unit, 12 ... encryption processing unit, 20 ... electronic post-office box server (file server apparatus), 21 ... post-office box's public key storage unit, 22 ... re-encryption key storage unit, 23 ... re-encryption processing unit, 24 ... encrypted data storage unit, 30 ... receiving apparatus, 31 ... recipient's key generation unit, 32 ... recipient's secret key storage unit, 34 ... re-encryption key generation unit, 35 ... decryption processing unit, 36 ... data output unit.

## Claims

1. A file server apparatus which is connected to a sending apparatus used by a sender who sends data and a receiving apparatus used by a recipient who receives the data, **characterized by** comprising:
reception means for receiving post-office box's encrypted data obtained by encrypting the data using a post-office box's public key from the sending apparatus;
re-encryption key storage means for storing a re-encryption key that is used for re-encrypting post-office box's encrypted data, which is obtained by encrypting the data using the post-office box's public key, into recipient's encrypted data, which is obtained by encrypting the data using a recipient's public key that is different from the post-office box's public key and forms a pair with a recipient's secret key managed in the receiving apparatus;
re-encryption means for re-encrypting the received post-office box's encrypted data into the recipient's encrypted data using the re-encryption key stored in the re-encryption key storage means; and
transmission means for transmitting the re-encrypted recipient's encrypted data to the receiving apparatus.

2. The apparatus according to claim 1, **characterized by** further comprising encrypted data storage means for storing the re-encrypted recipient's encrypted data,
wherein the transmission means transmits the recipient's encrypted data stored in the encrypted data storage means to the receiving apparatus in response to a request from the recipient.

3. The apparatus according to claim 1, **characterized by** further comprising encrypted data storage means for storing the received post-office box's encrypted data, wherein the re-encryption means re-encrypts the post-office box's encrypted data stored in the encrypted data storage means into the recipient's encrypted data using the re-encryption key stored in the re-encryption key storage means in response to a request from the recipient.

4. A file server system **characterized by** comprising: a sending apparatus used by a sender who sends data; a receiving apparatus used by a recipient who receives the data; and a file server apparatus connected to the sending and receiving apparatuses,
wherein the sending apparatus comprises:
input means for inputting the data in accordance with an operation of the sender; and
encryption means for encrypting the input data using a post-office box's public key to acquire post-office box's encrypted data,
the file server apparatus comprises:
re-encryption key storage means for storing a re-encryption key used for re-encrypting the post-office box's encrypted data, which is obtained by encrypting the data using the post-office box's public key, into recipient's encrypted data, which is obtained by encrypting the data using a recipient's public key different from the post-office box's public key; and
re-encryption means for re-encrypting the post-office box's encrypted data acquired by the encryption means into the recipient's encrypted data using the re-encryption key stored in the re-encryption key storage means, and
the receiving apparatus comprises:
secret key storage means for storing a recipient's secret key which forms a pair with the recipient's public key;
decryption means for decrypting the re-encrypted recipient's encrypted data using the recipient's secret key stored in the secret key storage means; and
output means for outputting data obtained by decrypting the recipient's encrypted data.

5. The system according to claim 4, **characterized in that** the receiving apparatus further comprises:
recipient's key generation means for generating the recipient's public key and the recipient's secret key which forms a pair with the recipient's public key;
recipient's secret key storage processing means for storing the generated recipient's secret key in the secret key storage means;
post-office box's key generation means for generating the post-office box's public key and a post-office box's secret key which forms a pair with the post-office box's public key; and
re-encryption key generation means for generating the re-encryption key using the recipient's public key and the recipient's secret key generated by the recipient's key generation means and the post-office box's public key and the post-office box's secret key generated by the post-office box's key generation means,
the file server apparatus further comprises:
post-office box's public key storage means for storing the post-office box's public key generated by the post-office box's key generation means; and
re-encryption key storage processing means for storing the re-encryption key generated by the re-encryption key generation means in the re-encryption key storage means, and
the encryption means included in the sending apparatus encrypts the input data by using the post-office box's public key stored in the post-office box's public key storage means included in the file server apparatus.
